# EUROPÄISCHE PATENTSCHRIFT

(11) **EP 0 617 550 B1**
(45) Veröffentlichungstag und Bekanntmachung des Hinweises auf die Patenterteilung: **19.11.1997**
(21) Anmeldenummer: 94103947.1
(22) Anmeldetag: 15.03.1994
(51) Int. Cl.: H04N 5/14

(54) **Übertragungsanordnung mit einer Entzerreranordnung**
Transmission device with an equalising device
Dispositif de transmission avec un dispositif égalisateur

(30) Priorität: 23.03.1993 DE 4309351
(43) Veröffentlichungstag der Anmeldung: 28.09.1994
(73) Patentinhaber: NOKIA TECHNOLOGY GmbH, 75175 Pforzheim (DE)
(72) Erfinder: Reime, Gerd, D-75328 Schömberg 4 (DE)

(56) Entgegenhaltungen:
- EP-A- 0 263 617
- EP-A- 0 302 500
- DE-A- 4 039 122
- GB-A- 2 144 302
- GB-A- 2 213 022
- US-A- 4 758 891

## Beschreibung

Die Erfindung betrifft eine Entzerreranordnung zum Regenerieren der Steilheit von Signalsprüngen nach dem Oberbegriff des Anspruches 1.

Der Erfindung liegt eine Anordnung zum Regenerieren der Steilheit von Signalsprüngen in einem Farbfernsehsignal, das ein Luminanzsignal und wenigstens ein Chrominanzsignal enthält, zu Grunde. Eine solche Anordnung ist in dem Dokument DE-A-42 15 007 beschrieben. Dem Dokument, daß zum Zeitpunkt der beanspruchten Priorität dieser Anmeldung nicht vorveröffentlicht war, entnimmt der Fachmann eine Entstöranordnung, die am Ausgang eines Übertragungskanals für das Chrominanzsignal eines Farbfernsehsignales angeordnet ist. Die Anordnung enthält im Übertragungsweg eine Verzögerungsleitung, an deren Eingang das eine Ende und an deren Ausgang das andere Ende einer elektronische Überblendeinrichtung in Form eines Potentiometers oder eines dreistufigen elektronisch steuerbaren Umschalters mit einer Widerstandskombination angeordnet ist. Die Überblendeinrichtung verbindet in den beiden Endstellungen entweder den Eingang oder den Ausgang der Verzögerungsleitung direkt mit ihrem Ausgang.

Eine Anordnung zum Erkennen von Signalsprüngen, die aus zwei Signalsprungdetektoren und einem Subtrahierer besteht, erzeugt ein Steuersignal in Form einer Wechselschwingung und markiert den Zeitpunkt, an dem theoretisch der Signalsprung erfolgt, mit einem Nulldurchgang. Das Steuersignal schaltet im Bereich von Signalsprüngen die Überblendeinrichtung zwischen dem Zustand der verzögerten und der unverzögerten Signalübertragung um. Jeder Signalsprungdetektor besteht aus einer Verzögerungsleitung und einem Differenzverstärker, dessen Eingänge mit dem Eingang bzw. dem Ausgang der Verzögerungsleitung verbunden sind. Die Ausgänge der Differenzverstärker sind jeweils mit einem Eingang eines Subtrahierers verbunden. Die in Serie geschalteten Verzögerungsleitungen der Detektoren weisen Verzögerungszeiten auf, die einerseits ein ungeradzahliges ganzes Vielfaches der halben Schwingungsdauer der Farbträgerschwingung des übertragenen Signales und andererseits geringfügig größer sind als die größte zu erwartende Anstiegszeit einer Signalflanke des Farbsignales. Diese entsprechen der Zeit des Phasenwechsels des Farbträgersignales von einer ersten Farbe zu einer zweiten Farbe. Die Verzögerungszeit der Verzögerungsleitung ist auf die Korrektur eines Chrominanzsignals einer Farbfernsehübertragung gerichtet, nämlich auf das Übertragen der Farbe durch die Phase einer Farbträgerschwingung mit konstanter Frequenz. Ein vorgeschaltetes Verzögerungsglied stellt eine Zeitkorrektur zwischen dem übertragenen Luminanzsignal und dem Chrominanzsignal her. Ein Hinweis zum Bemessen der Verzögerungszeiten für andere Signale, deren Signalsprünge infolge einer endlichen Bandbreite mit verflachten Signalübergängen übertragen werden, ist nicht enthalten.

Beim Übertragen eines Signalsprungs in einer Übertragungsanordnung mit begrenzter Bandbreite tritt nicht nur ein von der Bandbreite abhängige Verflachung der Signalflanke mit einer deutlichen Flankendauer auf, die etwa der halben Periodendauer der Grenzfrequenz der Übertragungsanordnung entspricht, sondern zusätzliche eine der verflachten Signalflanke folgendes Überschwingen. Dieses Überschwingen entspricht etwa der oberen Grenzfrequenz der Übertragungsanordnung und kann am Signalsprung zu erheblichen Verzerrungen führen. So werden hierdurch zum Beispiel bei einer Tonübertragung die hochfrequenten Tongsignalteile stark verfälscht oder es entstehen bei einer Videoübertragung an senkrechten Luminanzkanten Verzerrungen als störende Kantenechos, sogenanntes Ringing.

Aus dem Dokument US-A-4 758 891 ist eine weitere Schaltungsanordnung zum Verbessern der Flankensteilheit eines übertragenen Videosignals bekannt. Diese Lösung nutzt ebenfalls einen dreistufigen Umschalter der beim Auftreten eines Signalsprungs mittels einer Steuersignalschaltung von einem einfach verzögerten Signal, kurzzeitig zu einem zweifach verzögerten Signal, anschließend zu einem unverzögerten Signal und als Endzustand wieder zu einem einfach verzögerten Signal umgeschaltet wird. Das Steuersignal zum Betätigen des Signalumschalters wird durch Bildung der ersten und der zweiten Ableitung des Eingangssignals und Multiplikation dieser Größen gebildet. Ein Nachteil der Erfindung besteht jedoch darin, daß das das Signal aus drei verschiedenen verzögerten Zeitlagen sprunghaft umgeschaltet wird und das übertragene Signal außerhalb des Bereiches von Signalsprüngen immer ein Verzögerungsglied durchläuft. Wird eine solche Anordnung zum Beispiel zum Regenerieren eines Luminanzsignals eingesetzt, so muß das Chrominanzsignal im gleichen Maße verzögert werden.

Der Erfindung liegt die Aufgabe zugrunde, die Schaltungsanordnung entspechend dem Dokument DE-A-4215007 so auszubilden, daß sie zum Regerieren von verzerrten Signalen, die ursprünglich mit sprunghaften Informationsänderungen behaftet sind, geeignet ist und Störungen durch Überschwingen nach solchen Signalsprüngen beseitigt werden können. Diese Aufgabe wird nach der Erfindung durch die Merkmale des kennzeichnenden Teiles des Anspruches 1 gelöst.

Mit den Mitteln der Erfindung werden ebenso wie bei der Schaltungsanordnung entspechend dem Dokument DE-A1 4215007 in einfacher Weise zum Erfassen der Signalsprünge zwei zeitlich versetzte, sich aber noch überlappende Differentialableitung dS/dt vom übertragenen Signal erzeugt. Dafür wird das übertragene Signal mit Verzögerungsgliedern so verzögert, daß die Vorderflanke eines in einer Anordnung zum Auswerten der Signalflanken erzeugten Detektorsignales eines zweiten Signalsprungdetektors wenigstens teilweise im zeitlichen Bereich der Rückflanke des Detektorsignals eines ersten Detektors liegt.

Durch Subtraktion beider sich überlappender Detektorsignale oder durch eine Addition der beiden sich überlappenden, zueinander invertierten Differenzsignale entsteht ein Flankendifferenzsignal, das definiert um eine Nullinie schwingt und im Bereich der Überlappung der beiden Einzelsignale in der Mitte des Flankendifferenzsignals einen Nulldurchgang an der steilsten Stelle des Signals enthält. Die Lage des Nulldurchgangs ist weitgehend unabhängig von der Gestalt und der Amplitude der beiden Einzelsignale. Dadurch wird erreicht, daß das Überblenden des übertragenen Signales vom Ausgang zum Eingang des zweiten Verzögerungsgliedes schnellstmöglich und ohne zeitliche Unterbrechung zu einem stets gleichbleibenden Zeitpunkt erfolgt.

Als Detektoren sind besonders vorteilhaft Anordnungen mit einer Verzögerungsleitung und einem Subtrahierer, dessen Eingänge mit dem Eingang bzw. dem Ausgang der Verzögerungsleitung verbunden sind, wobei deren Verzögerungszeit in der Größenordnung der Flankendauer einer von einem ursprünglichen Signalsprung beim Übertragen entstandenen Signalflanke liegt.

Auf diese Weise wird im Steuersignal die Lage des ursprünglichen Signalsprungs optimal markiert. Die Verzögerungszeit des Verzögerungsgliedes ist gleich der halben Periodenzeit des der übertragenen Signalflanke folgenden Überschwingens. Dadurch wird erreicht, daß sich in der Mittenstellung der Überblendeinrichtung das Überschwingen gegenseitig auslöscht.

Die Unteransprüche kennzeichnen vorteilhafte Ausgestaltungen der Erfindung.
Es ist nicht erforderlich, die Verzögerungsglieder der Entzerrungsanordnung unbedingt als Verzögerungsleitungen oder als Laufzeitglieder auszubilden. Es können hierfür auch andere Elemente verwendet werden, in einfachen Fällen auch Tiefpaß- oder Hochpaßschaltungen oder bei der Anwendung in integrierten Schaltungen in der Gestalt integrierbarer Schaltungselemente. Die Erfindung wird nachfolgend anhand besonders vorteilhafter Ausführungen näher erläutert. Diese Beispiele begrenzen jedoch nicht den Umfang der Erfindung.

In den zugehörigen Zeichnungen zeigen:
- Figur 1 und Figur 3:: je ein Blockschaltbild einer erfindungsgemäßen Entzerreranordnung,
- Figur 2 und Figur 4:: Diagramme zu den erzeugten Signalen in der in Figur 1 und 3 dargestellten Anordnungen,
- Figur 5:: eine Entzerreranordnung mit vier gleichen Verzögerungsgliedern in einer Reihenschaltung.

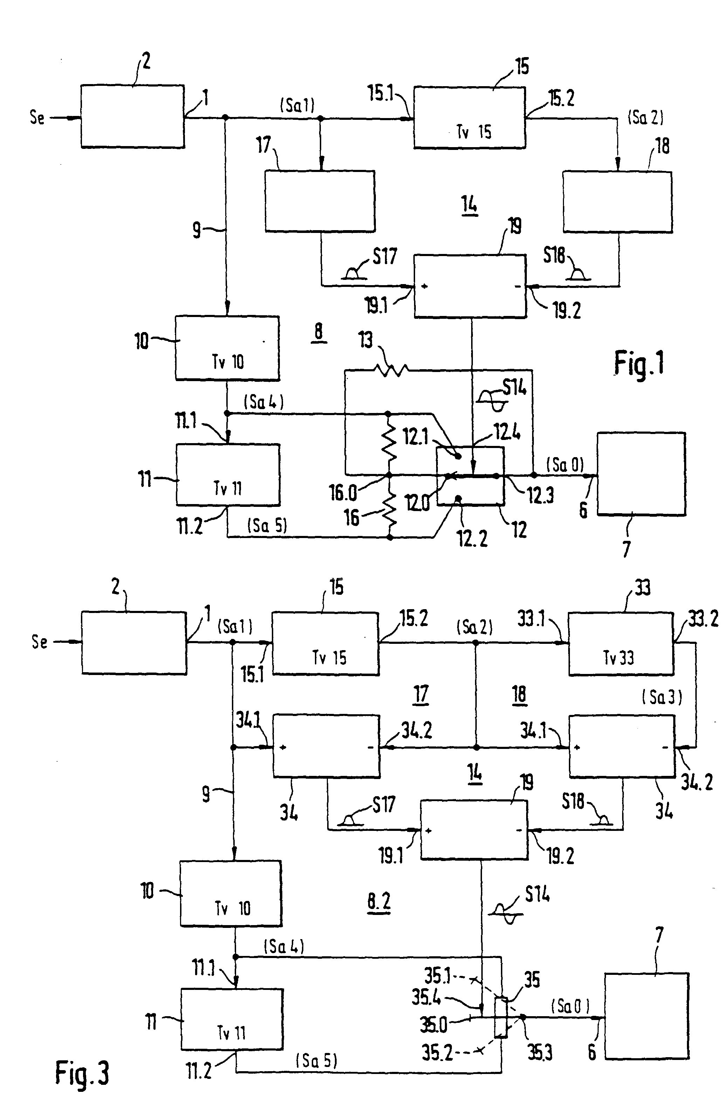

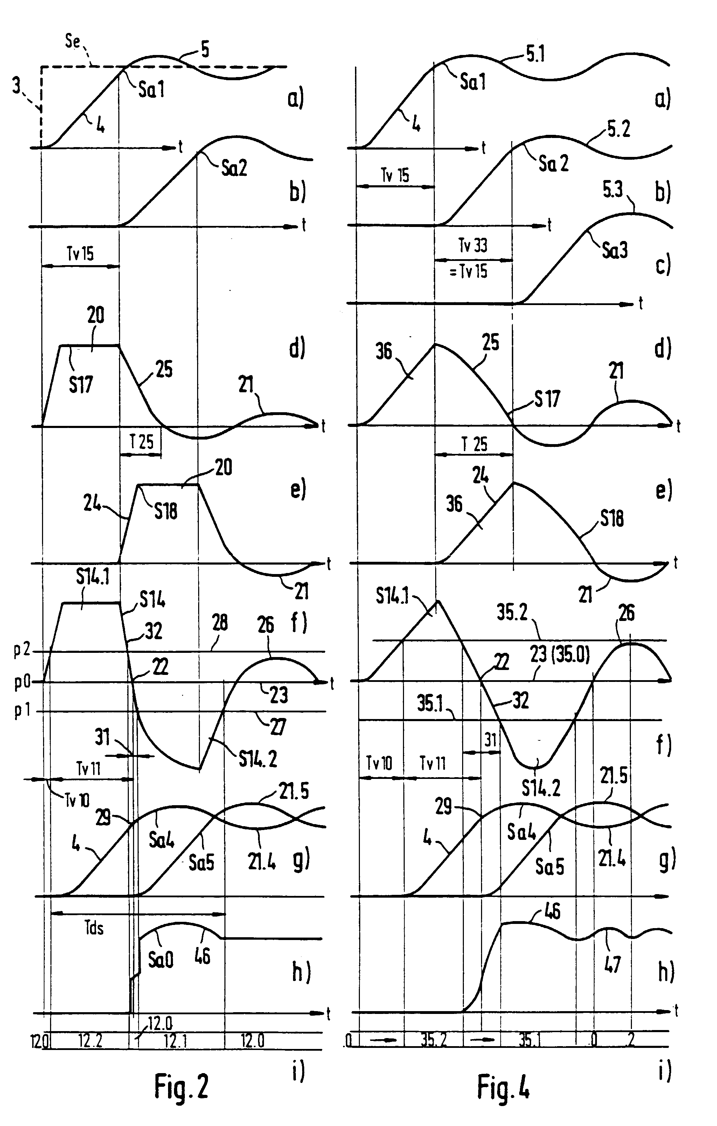

Die Figur 1 zeigt eine Entzerreranordnung 8, die an den Ausgang 1 einer Übertragungsanordnung 2 angeschlossen ist. Die Übertragungsanordnung 2 verzerrt ein im Diagramm a) der Figur 2 dargestelltes Eingangssignal Se mit einem steilen Signalsprung 3 derart, daß der Signalsprung 3 am Ausgang 1 der Übertragungsanordnung 2 eine Anstiegsflanke 4 mit einer Flankendauer T4 aufweist, die etwa der halben Periodendauer T2 einer Schwingung mit der oberen Grenzfrequenz der Übertragungsanordnung 2 entspricht. Daran schließt sich ein Überschwingen 5 an, mit einer Periodendauer T5, die etwa der oberen Grenzfrequenz der Übertragungsanordnung 2 entspricht. Zum Entzerren des übertragenen Eingangssignales Sa1 ist in den Signalübertragungsweg 9 zwischen der Übertragungsanordnung 2 und dem Signalempfänger 7 eine Entzerreranordnung 8 geschaltet.

Diese enthält ein erstes Verzögerungsglied 10 und ein weiteres Verzögerungsglied 11 in Serie. An den Anschlüssen des Verzögerungsgliedes 11 ist eine Überblendeinrichtung 12 in Form eines dreistufigen Schalters angeschlossen. Die Anschlüsse der Überblendeinrichtung 12 sind außerdem mit einer Widerstandskombination 16 überbrückt. Die Mittenstellung 12.0 des dreistufigen Schalters, die gleichzeitig die Ruhestellung 12 ist, ist mit dem Mittenabgriff 16.0 der Widerstandskombination 16 verbunden.

Zwischen dem Mittenabgriff 16.0 und dem Ausgang 12.3 der Überblendeinrichtung 12 ist ein Widerstand 13 angeordnet, dessen Widerstandswert wesentlich größer ist als der Wert der Widerstandskombination 16, um Signalunterbrechungen während des Betätigens der Überblendeinrichtung 12 zu vermeiden. An einem Steuereingang 12.4 wird die Überblendeinrichtung 12 von einem Steuersignal S14 einer Steueranordnung 14 gesteuert. Die Steueranordnung 14 enthält ein weiteres Verzögerungsglied 15, das ebenfalls an der Übertragungsanordnung 2 angeschlossen ist und an dessen Eingang 15.1 ein erster Signalsprungdetektor 17 und an dessen Ausgang 15.2 ein zweiter Signalsprungdetektor 18 angeschlossen ist.

Im Beispiel sind die Detektoren 17 und 18 Differenzieranordnungen, die aus einem Signal Sa1 oder Sa2 eine Differentialableitung dS/dt bilden und so ein glocken- oder trapezförmiges Ausgangssignal S17 und S18 erzeugen, das je einem Eingang 19.1 und 19.2 eines Subtrahierers 19 zugeführt wird. Der Subtrahierer 19 bildet aus den beiden Detektorsignalen S17 und S18 das Steuersignal S14 für die Überblendeinrichtung 12.

Die Funktion der Anordnung wird anhand der Signaldiagramme a) bis h) der Figur 2 näher erläutert.
Diagramm a) zeigt das Eingangssignal Se am Eingang der Übertragungsanordnung 2, das einen Signalsprung 3 enthält und das übertragene Signal Sa1 am Ausgang 1. Beim Übertragen über die in der Bandbreite begrenzte Übertragungsanordnung 2 wird das Eingangssignal Se derart verzerrt, daß am Ausgang 1 an Stelle des Signals Se mit einem steilen Signalsprungs 3 ein Signal Sa1 mit einer Signalflanke 4 entsteht, das ein Überschwingen 5 enthält. Das Signal Sa1 liegt sowohl am Eingang 15.1 des Verzögerungsgliedes 15 als auch am Eingang des Verzögerungsgliedes 10. Das Verzögerungsglied 15 bildet das verzögerte Signal Sa2 (Diagramm b)) für den Eingang des zweiten Detektors 18. Beide Detektoren 17 und 18 sind im Beispiel als Differentiatoren ausgebildet und erzeugen aus den anliegenden Signalen Sa1 und Sa2 ein differenziertes Detektorsignal S17 und S18, welches die Diagramme d) und e) zeigen und das an der Stelle der Differentiation der Signalflanken 4 der Signale am Eingang der Detektoren einen trapezförmigen Impuls 20 mit einer Vorder- und einer Rückflanke und daran anschließend ein Überschwingen 21 enthält, das dem Überschwingen 5 entspricht.

Die Detektorsignale S17 und S18 werden den Signaleingängen 19.1 und 19.2 des Subtrahierers 19 zugeführt. Dieser subtrahiert die beiden zeitlich versetzten Detektorsignale S17 und S18 und bildet das Steuersignal S14, das zum Steuern der Überblendeinrichtung 12 benutzt wird und im Diagramm f) dargestellt ist. Das Steuersignal S14 besteht aus einer ersten Halbschwingung S14.1 und einer zweiten, entgegengesetzten Halbschwingung S14.2 und enthält zwischen den Halbschwingungen eine steile Nulldurchgangsflanke 32 mit einem Nulldurchgang 22 an der Nullinie 23. Wenn das Steuersignal S14 einen Pegelwert p0 = 0 aufweist, befindet sich die Überblendeinrichtung 12 in der Mittenstellung 12.0.

Die Verzögerungszeit Tv15 des Verzögerungsgliedes 15 ist so gewählt, daß die Vorderflanke 24 des Flankenimpulses 20 des Detektorsignales S18 des zweiten Detektors 18 zeitlich wenigstens noch teilweise im Zeitbereich T25 der Rückflanke 25 des Flankenimpulses des Detektorsignals S17 des ersten Detektors 17 liegt. Damit wird eine möglichst steile Nulldurchgangsflanke 32 erreicht. Da in vielen Fällen die Impulsbreite des Flankenimpulses 20 etwa gleich der halben Periodendauer T5 des Überschwingens 5 des übertragenen Signales Sa1 ist und bei der Subtraktion der beiden Detektorsignale S17 und S18 durch den Versatz um eine halbe Schwingungsperiode eine Addition des Überschwingens auftritt, ist es von Vorteil, die Verzögerungszeit Tv15 des Verzögerungsgliedes 15 innerhalb des genannten Zeitbereiches T25 so zu bemessen, daß sie etwa ein oder drei Viertel der Periodendauer T5 des Überschwingens beträgt. Damit bleibt das Überschwingen 26 des Steuersignales S14 gering und die Steuerung der Überblendeinrichtung 12 wird nicht beeinflußt. Das Steuersignal S14 verändert die Schalterstellung der Überblendeinrichtung 12 erst mit Signalpegeln, die außerhalb der Schaltpegel p1 oder p2, deren Pegellinien 27 und 28 im Diagramm f) eingezeichnet sind, liegen. Wenn das Steuersignal S14 den Schaltpegel p1 unterschreitet, nimmt der Umschalter die erste Endstellung 12.1 ein. In dieser wird das vom Verzögerungsglied 11 unverzögerte Signal Sa4, das im Diagramm g) dargestellt ist, an den Signalausgang 12.3 der Überblendeinrichtung 12 und damit zum Signalempfänger 7 übertragen. Liegt das Steuersignals S14 dagegen über den Schaltpegel p2, befindet sich der Umschalter in der zweiten Endstellung 12.2. In dieser wird das vom Verzögerungsglied 11 verzögerte Signal Sa5 zum Signalausgang 12.3 der Überblendeinrichtung 12 übertragen. Die Verzögerungszeit Tv11 des Verzögerungsgliedes 11 ist so gewählt, daß sie gleich der halben Periodendauer T5 des Überschwingens 5 entspricht. Dadurch wird in der Mittenstellung 12.0 das Überschwingen 5.4 und 5.5 der beiden Signale Sa4 und Sa5 nahezu vollständig kompensiert.

Die Verzögerungszeit Tv10 des Verzögerungsgliedes 10 ist so eingestellt, daß das Ende 29 der Signalflanke 4 des Signales Sa4 bzw. der Anfang 30 des verzögerten Signales Sa5 im Zeitbereich 31 der Nulldurchgangsflanke 32 des Steuersignals S14 liegt. Dadurch bewirkt das im Diagramm f) dargestellte Steuersignal S14, daß während der positiven Halbschwingung S14.1 das Signal Sa5 und während der negativen Halbschwingung S14.2 das Signal Sa4 an den Signalempfänger 7 übertragen wird.

Das entzerrte Signal Sa0 am Ausgang 12.3 ist im Diagramm h) dargestellt.
Das Balkendiagramm i) zeigt die Schalterstellungen des Umschalters. Das Ausgangssignal Sa0 folgt im Bereich Tds einer Signalflanke 4 zunächst dem Signalverlauf des verzögerten Signales Sa5, während des Nulldurchgangs 22 des Steuersignales S14 etwa dem Verlauf der Nulldurchgangsflanke 32 und während der zweiten Halbschwingung S14.2 dem Verlauf des Signals Sa4. Danach wird der weitere Signalverlauf des Ausgangssignales Sa0 als Mittelwert aus den Signalen Sa4 und Sa5 gebildet, wodurch sich das in Gegenphase befindliche Überschwingen 21.4 und 21.5 kompensiert. Die Schaltpegel p1 und p2 der Überblendeinrichtung 12 sind im Beispiel so gewählt, daß sie vom Überschwingen 26 des Steuersignales 14 nicht erreicht werden.

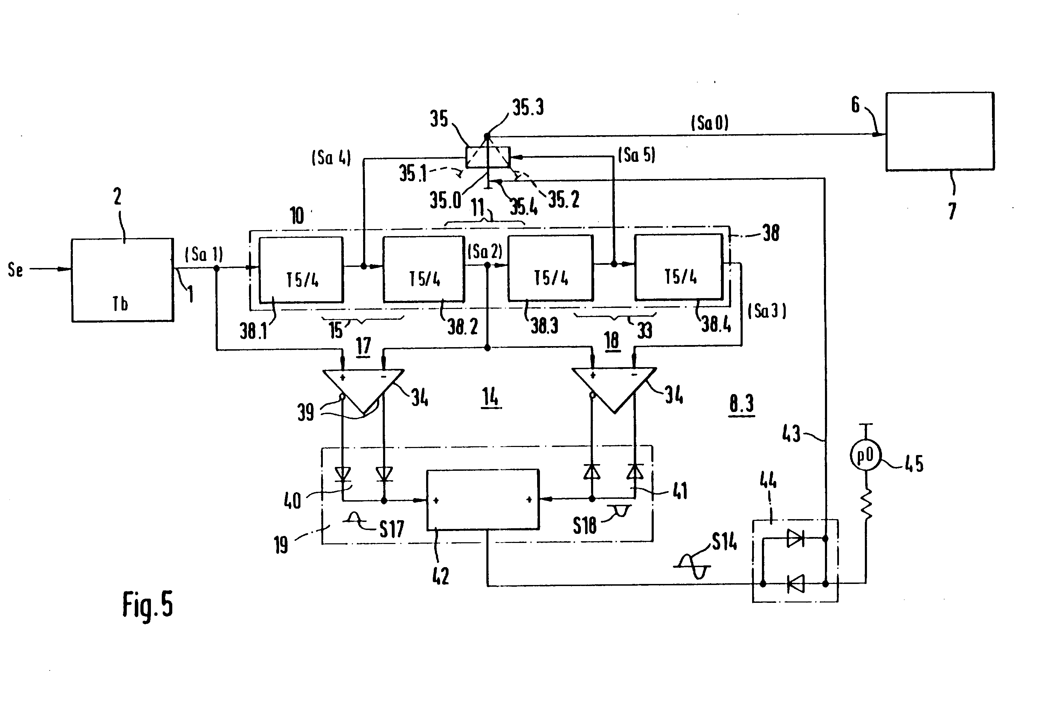

In Figur 3 ist eine besonders vorteilhafte Ausführung einer Entzerreranordnung 8.2 dargestellt, die sich von der Entzerreranordnung 8 entsprechend Figur 1 im wesentlichen durch die Detektoren 17 und 18 unterscheidet, die je aus einem Verzögerungsglied 15 bzw. 33 und einem Subtrahierer 34 bestehen. Als Überblendeinrichtung 12 wird ein steuerbares, elektronisches Potentiometer 35 eingesetzt. Einander entsprechende Elemente und Signale in den Figuren 1 bis 4 weisen gleiche Bezugszeichen auf.

Bei jedem der beiden Detektoren ist ein Eingang 34.1 des Subtrahierers 34 dem Eingang 33.1 des Verzögerungsgliedes 15 bzw. 33 und ein Eingang 34.2 des Subtrahierers 34 mit dem Ausgang 33.2 des Verzögerungsgliedes verbunden. Im Beispiel gemäß Fig. 3 entspricht das Verzögerungsglied 15 des ersten Detektors 17, in Funktion und Dimensionierung dem Verzögerungsglied 15 in Figur 1. Das zusätzliche Verzögerungsglied 33 für den zweiten Detektors 18 gleicht in seinen Eigenschaften dem Verzögerungsglied 15.

In den Diagrammen a) bis c) der Figur 4 sind nacheinander das übertragene Ausgangssignal Sa1, das vom Verzögerungsglied 15 verzögerte Signal Sa2 und das vom Verzögerungsglied 33 nochmals verzögerte Ausgangssignal Sa3 mit je einer Signalflanke 4 und dem Überschwingen 5 dargestellt. Der Detektor 17 bildet aus den Signalen Sa1 und Sa2 und der Detektor 18 aus den Signalen Sa2 und Sa3 je ein Detektorsignal S17 bzw. S18, die an Stelle der Signalflanken 4 der verglichenen Signale Sa1 und Sa2 einen dreieckförmigen Flankenimpuls 36 und ein daran anschliessendes Überschwingen 21 aufweisen. Dieses ist in den Diagrammen d) und e) der Figur 4 dargestellt. Da die Verzögerungszeit Tv15 bzw. Tv33 der Verzögerungsglieder 15 und 33 im Bereich der Flankendauer T4 einer Signalflanke 4 liegt, die dem übertragenen Signalsprungs 3 entspricht, liegt die Vorderflanke 24 des Flankenimpulses 36 vom Detektorsignal S18 immer vollständig im Zeitbereich T25 der Rückflanke 25 des Flankenimpulses 36 des Detektorsignales S17.

Auf diese Weise enthält das im Diagramm f) der Figur 4 dargestellte Steuersignal S14 am Nulldurchgang 22 eine optimale Lage der Nulldurchgangsflanke 32. An den Subtrahierer 34 und 19 erfolgt infolge der Phasenlagen des Überschwingens 21 der Signale Sa1, Sa2 und Sa3 eine Addition des Überschwingens 21. Deshalb ist das Überschwingen 26 des Steuersignals S14 verhältnismäßig groß. Wenn am Steuereingang 35.4 des steuerbaren Potentiometers 35 ein Signal innerhalb der Schaltpegel p1 und p2 anliegt, ist dieses so eingestellt, daß das Signal Sa4 und das verzögerte Signal Sa5 gemischt zum Ausgang der Entzerreranordnung 8.2 übertragen werden. Bei dem im Diagramm f) der Figur 4 eingezeichneten Pegeln p1 und p2 des Steuersignales S14 ist das elektronische Potentiometer 35 in die Endstellungen 35.1 oder 35.2 gestellt. Dabei wird entweder das Signal Sa4 oder das Signal Sa5 an den Ausgang der Entzerreranordnung 8.2 übertragen.

Im Beispiel wird auch das verhältnismäßig große Überschwingen 26 des Steuersignals S14 an den Steuereingang 35.4 des elektronischen Potentiometers 35 übertragen, wobei das Potentiometer mit aussteuert wird. Deshalb enthält das Signal Sa0 am Ausgang der Entzerreranordnung anstelle eines Überschwingens mit einer Frequenz des Überschwingens 5 des Signales Sa1 ein Überschwingen 47 mit der doppelten Frequenz des Überschwingens 5 und mit geringerer Amplitude. Da im allgemeinen die Übertragungsbandbreite des Signalempfängers 7 nicht größer ist als die der Übertragungsanordnung 2, kann auf einfache Weise das durch die Steuerung bewirkte Überschwingen 47 für die weitere Signalverarbeitung unterdrückt werden.

Eine weitere Ausführung einer Entzerreranordnung ist in Figur 5 dargestellt. Sie unterscheidet sich von der in Figur 3 dargestellten Entzerreranordnung 8.2 im wesentlichen dadurch, daß die einzelnen Verzögerungsglieder zu einer Kette 38 von vier Verzögerungsgliedern 38.1 bis 38.4 zusammengefaßt sind, von denen das erste Verzögerungsglied 38.1 das Verzögerungsglied 10 im Signalübertragungsweg 9, die Reihenschaltung der beiden ersten Verzögerungselemente 38.1 und 38.2 das Verzögerungsglied 15, die Reihenschaltung der beiden mittleren Verzögerungsglieder 38.2 und 38.3 das Verzögerungsglied 11 und die Reihenschaltung der beiden letzten Verzögerungsglieder 38.3 und 38.4 das Verzögerungsglied 33 des zweiten Detektors 18 darstellen.

Die Verzögerungszeit Tv38 jedes dieser Verzögerungsglieder der Kette 38 ist gleich einem Viertel der Periodendauer T5 des Überschwingens 5. Da die Periodendauer T5 des Überschwingens 5 etwa gleich der halben Periodendauer T2 der oberen Grenzfrequenz der Übertragungsanordnung 2 ist, wird mit dieser Anordnung der Verzögerungsglieder 38.1 bis 38.4 sowohl das Auslöschen des Überschwingens 5 der Signale Sa4 und Sa5 für das Ausgangssignal Sa0 der Entzerreranordnung 8.3 erreicht, als auch eine optimale Erzeugung des Steuersignales S14 gewährleistet, sowie die für die optimale Entzerrung des Signales Sa1 notwendige zeitliche Lage der Nulldurchgangsflanke 32 des Steuersignals S14 eingestellt.

Die Subtrahierer 34 der Detektoren 17 und 18 sind in diesem Beispiel Differenzverstärker mit je einem invertierenden Ausgang 39 und einem nichtinvertierenden Ausgang, die über Gleichrichterpaare 40 und 41 an die beiden Signaleingänge eines Signaladdierers 42 angeschlossen sind. Der Signaladdierer 42 bildet zusammen mit den beiden Gleichrichterpaaren 40 und 41 durch die unterschiedlich angeordnete Durchlaßrichtung der Gleichrichterpaare den Subtrahierer 19 der Steuerschaltung 14. In der Signalleitung 43 ist zwischen dem Subtrahierer 19 und dem elektronischen Potentiometer 35 zusätzlich ein symmetrischer Schwellwertschalter 44 angeordnet, der erst dann das Steuersignales S14 durchläßt, wenn dessen Pegelbetrag in beiden Richtungen einen Sperrpegelwert des Schwellwertschalters 44 überschreitet. Dadurch wird verhindert, daß das Überschwingen 26 des Steuersignals S14 störend auf die Steuerung des Potentiometers 35 einwirkt. Außerdem ist an den Steuereingang 35.4 des steuerbaren elektronischen Potentiometers 35 eine hochohmige Pegelquelle 45 angeschlossen, die bei Fehlen eines Steuersignales S14 einen Ruhepegel p0 am Steuereingang des Potentiometers aufrecht erhält.

Der Signalverlauf des in Figur 5 dargestellten Beispieles entspricht etwa dem in den Diagrammen a) bis h) der Figur 4 dargestellten Signalverläufen mit der Ausnahme, daß das im Diagramm h) dargestellte Ausgangssignal Sa0 der Entzerreranordnung 8.3 außer der ersten Anhebung 46 kein weiteres Überschwingen 47 enthält.

In einer weiteren Ausführung der in Figur 5 dargestellten Anordnung ist die Kette 38 der in Reihe geschalteten Verzögerungselemente eine Laufzeitkette oder ein Laufzeitglied mit entsprechenden Abgriffen.

## Patentansprüche

1. Entzerreranordnung zum Regenerieren von Signalsprüngen (3) in einem übertragenen Signals (Sa1), die in einem Übertragungsweg (9) angeordnet ist, der eine in der Bandbreite begrenzte Übertragungsanordnung (2) mit einem Signalempfänger (7) verbindet und die folgende Schaltungsstufen enthält:
- eine Steueranordnung (14), die mindestens aus einem ersten Verzögerungsglied (15), das an die Übertragungs anordnung (2) angeschlossen ist, mit dessen Eingang (15.1) ein erster Signalsprungdetektor (17) und mit dessen Ausgang (15.2) ein zweiter Signalsprungdetektor (18) verbunden ist und einen Subtrahierer (19), dessen Signaleingänge (19.1, 19.2) jeweils mit einem Signalausgang eines Signalsprungdetektors (17, 18) verbunden sind, besteht, zum Erzeugen eines Steuersignals (S14), welches den Zeitpunkt eines Signalsprungs (3) durch einen Nulldurchgang (22) einer Schwingung (S14.1, S14.2) in einem Zeitbereich (31) markiert,
- ein zweites Verzögerungsglied (10), zum Verzögern des übertragenen Signals (Sa1) und an dessen Ausgang ein zweites verzögertes Signal (Sa4) liegt,
- ein drittes Verzögerungsglied (11) das im Übertragungsweg (9) hinter dem zweiten Verzögerungsglied (10) angeordnet ist und an dessen Ausgang (11.2) ein drittes verzögertes Signal (Sa5) liegt,
- eine Überblendeinrichtung (12 oder 35), die zwischen den Eingang (11.1) und den Ausgang (11.2) des dritten Verzögerungsgliedes (11) geschaltet ist und deren Übertragungszustände (12.0, 12.1, 12.2) vom Steuersignal (S14) so steuerbar sind, daß kurze Zeit vor einem Signalsprung (3) das dritte verzögerte Signal (Sa5), unmittelbar nach dem Zeitpunkt eines Signalsprungs (3) das zweites verzögerte Signal (Sa4) und sonst ein gemittelter Wert aus beiden Signalen (Sa4, Sa5) zum Ausgang des Übertragungswegs (9) übertragen wird,
und worin
- die Verzögerungszeit (Tv15) des ersten Verzögerungsgliedes (15) so bemessen ist, daß die Vorderflanke (24) des bei der Detektion einer Signalflanke (4) des Nutzsignales (Sal) erzeugten Detektorsignales (S18) des zweiten Detektors (18) wenigstens teilweise im zeitlichen Bereich (T25) der Rückflanke (25) des zugehörigen Detektorsignales (S17) des ersten Detektors (17) liegt,
- die Verzögerungszeit (Tv10) des zweiten Verzögerungsgliedes (10) so bemessen ist, daß das Ende (29) der Signalflanke (4) des am Eingang (11.1) des dritten Verzögerungsgliedes (11) liegenden Signales (Sa4) zeitlich im Bereich (31) des Nulldurchganges (22) des Steuersignales (S14) liegt,
- und die Verzögerungszeit (Tv11) des dritten Verzögerungsgliedes (11) gleich der halben Periodenzeit (T5) des der Signalflanke (4) des übertragenen Signales (Sa1) folgenden Überschwingens (5) ist.

2. Entzerreranordnung nach Anspruch 1,
**dadurch gekennzeichnet,** daß die Verzögerungsglieder Verzögerungsleitungen,
Laufzeitglieder, Hoch- oder Tiefpaßschaltung sind.

3. Entzerreranordnung nach Anspruch 1,
**dadurch gekennzeichnet,**
- daß jeder Signalsprungdetektor (17, 18) ein in einem Signalweg des übertragenen Signales (Sa1) angeordnetes Verzögerungsglied (15, 33) und einen Subtrahierer (34) enthält, der mit einem Signaleingang (34.1) mit dem Eingang (15.1, 33.1) des Verzögerungsgliedes (15, 33) und der mit dem anderen Signaleingang (34.2) mit dem Ausgang (15.2, 33.2) des Verzögerungsgliedes (15, 33) verbunden ist,
- und daß die Verzögerungszeit (Tv15, Tv33) der Verzögerungsglieder (15, 33) in der Größenordnung der Flankendauer (T4) der bei einem Signalsprung (3) von der Übertragungsanordnung (2) erzeugten Signalflanke (4) liegt.

4. Entzerreranordnung nach Anspruch 1,
**dadurch gekennzeichnet,** daß die Überblendeinrichtung (12) ein steuerbares elektronisches Potentiometer (35) ist.

5. Entzerreranordnung nach Anspruch 1,
**dadurch gekennzeichnet,** daß die Überblendeinrichtung (12) ein dreistufiger Signalumschalter ist, dessen Enden mit einer Widerstanskombination (16) verbunden sind.

6. Entzerreranordnung nach Anspruch 1,
**dadurch gekennzeichnet,** daß dem Signalausgang des Subtrahierers (19) ein symmetrischer Schwellwertschalter (44) nachgeschaltet ist, den nur Signalpegel passieren, die außerhalb des Bereiches zwischen den Pegelwerten p1 und p2 liegen.

7. Entzerreranordnung nach Anspruch 3,
**dadurch gekennzeichnet,** daß sie eine Kette (38) von vier gleichen in Serie geschalteten Verzögerungsgliedern (38.1 bis 38.4) enthält, deren Verzögerungszeit (Tv38) je ein Viertel der Periodenzeit (T5) des Überschwingens (5) des übertragenen Signales (Sa1) ist wobei der erste Detektor (17) an die beiden ersten Verzögerungselemente (38.1 und 38.2), der zweite Detektor (18) an die beiden letzten Verzögerungselemente (38.3 und 38.4) und die Überblendeinrichtung (12) an die Serienschaltung der beiden mittleren Verzögerungselemente (38.2, 38.3) angeschlossen ist.

## Claims

1. Equalizing device for regenerating signal changes (3) in a transmitted signal (Sa1), which is disposed in a transmission path (9) connecting a bandwidth-limited transmission arrangement (2) to a signal receiver (7) and which contains the following circuit stages:
- a control arrangement (14) which comprises at least a first delay element (15), which is connected to the transmission arrangement (2), to the input (15.1) of which delay element a first signal-change detector (17) is connected and to the output (15.2) of which delay element a second signal-change detector (18) is connected, and a subtracter (19), whose signal inputs (19.1, 19.2) are each connected to a signal output of a signal-change detector (17, 18), for generating a control signal (S14) which marks the instant of a signal change (3) by a passage through zero (22) of an oscillation (S14.1, S14.2) in a time interval (31).
- a second delay element (10) for delaying the transmitted signal (Sa1), at whose output there is a second delayed signal (Sa4),
- a third delay element (11), which is disposed in the transmission path (9) downstream of the second delay element (10) and at whose output (11.2) there is a third delayed signal (Sa5),
- a cross-fade device (12 or 35) which is connected between the input (11.1) and the output (11.2) of the third delay element (11) and whose transmission states (12.0, 12.1, 12.2) can be controlled by the control signal (S14) in such a way that the third delayed signal (Sa5) is transmitted a short time before a signal change (3), the second delayed signal (Sa4) is transmitted immediately after the instant of a signal change (3) and an average value of the two signals (Sa4, Sa5) is otherwise transmitted to the output of the transmission path (9),
and wherein
- the delay time (Tv15) of the first delay element (15) is dimensioned so that the leading edge (24) of the detector signal (S18), generated in the detection of a signal edge (4) of the wanted signal (Sal), of the second detector (18) is at least partially within the time interval (T25) of the trailing edge (25) of the associated detector signal (S17) of the first detector (17),
- the delay time (Tv10) of the second delay element (10) is dimensioned so that the end (29) of the signal edge (4) of the signal (Sa4) present at the input (11.1) of the third delay element (11) is in the interval (31) with respect to time of the passage through zero (22) of the control signal (S14),
- and the delay time (Tv11) of the third delay element (11) is equal to half the cycle time (T5) of the overshoot (5) following the signal edge (4) of the transmitted signal (Sa1).

2. Equalizing device according to Claim 1, characterized in that the delay elements are delay lines, lag elements, a high-pass or low-pass circuit.

3. Equalizing device according to Claim 1, characterized
- in that each signal change detector (17, 18) contains a delay element (15, 33) disposed in a signal path of the transmitted signal (Sa1) and a subtracter (34) which is connected by means of one signal input (34.1) to the input (15.1, 33.1) of the delay element (15, 33) and which is connected by means of the other signal input (34.2) to the output (15.2, 33.2) of the delay element (15, 33),
- and in that the delay time (Tv15, Tv33) of the delay elements (15, 33) is in the order of magnitude of the edge time (T4) of the signal edge (4) generated during a signal change (3) of the transmission arrangement (2).

4. Equalizing device according to Claim 1, characterized in that the cross-fade device (12) is a controllable electronic potentiometer (35).

5. Equalizing device according to Claim 1, characterized in that the cross-fade device (12) is a three-stage signal changeover switch whose ends are connected to a resistance combination (16).

6. Equalizing device according to Claim 1, characterized in that a symmetrical threshold switch (44) which passes only signal levels which are outside the range between the signal values p1 and p2 is connected downstream, of the signal output of the substrater (19) .

7. Equalizing device according to Claim 3, characterized in that it contains a string (38) of four identical delay elements (38.1 to 38.4) which are connected in series and whose delay time (Tv38) is in each case one quarter of the cycle time (T5) of the overshoot (5) of the transmitted signal (Sa1), the first detector (17) being connected to the first two delay elements (38.1 and 38.2), the second detector (18) being connected to the last two delay elements (38.3 and 38.4) and the cross-fade device (12) being connected to the series circuit of the two central delay elements (38.2, 38.3).

## Revendications

1. Dispositif égalisateur pour régénérer des sauts (3) de signal dans un signal (Sa1) transmis, lequel dispositif égalisateur est disposé dans une voie (9) de transmission qui relie un dispositif (2) de transmission à largeur de bande limitée à un récepteur (7) de signaux et comprend les étages de circuit suivant :
- un dispositif (14) de commande qui est formé au moins d'un premier élément (15) de retard qui est connecté au dispositif (2) de transmission, à l'entrée (15.1) duquel est relié un premier détecteur (17) de saut de signal et à la sortie (15.2) duquel est relié un deuxième détecteur (18) de saut de signal et d'un soustracteur (19) dont les entrées (19.1, 19.2) de signal sont chacune reliées à une sortie de signal d'un détecteur (17, 18) de saut de signal, pour produire un signal (S14) de commande qui marque dans une plage (31) de temps le moment d'un saut (3) de signal par un passage à zéro (22) d'une oscillation (S14.1, S14.2),
- un deuxième élément (10) de retard destiné à retarder le signal (Sa1) transmis et à la sortie duquel on obtient un deuxième signal (Sa4) retardé,
- un troisième élément (11) de retard qui est disposé dans la voie (9) de transmission en aval du deuxième élément (10) de retard et a la sonie (11.2) duquel on obtient un troisième signal (Sa5) retardé,
- un dispositif (12 ou 35) de mélange qui est monté entre l'entrée (11.1) et la sortie (11.2) du troisième élément (11) de retard et dont les états de transmission (12.0, 12.1, 12.2) peuvent être commandés par le signal (S14) de commande de telle manière que l'on transmette à la sortie de la voie (9) de transmission, peu de temps avant le saut (3) de signal le troisième signal (Sa5) retardé, immédiatement après un saut (3) de signal le deuxième signal (Sa4) retardé, et sinon une moyenne des deux signaux (Sa4, Sa5)
et dans lequel
- le retard (Tv15) du premier élément (15) de retard est calculé de telle manière que le flanc avant (24) du signal (S18) du deuxième détecteur (18) produit lors de la détection d'un flanc (4) dû signal utile (Sa1) se trouve au moins en partie dans la plage de temps (T25) du flanc arrière (25) du signal de détecteur (S17) correspondant du premier détecteur (17),
- le retard (Tv10) du deuxième élément (10) de retard est calculé de telle manière que la fin (29) du flanc (4) du signal (Sa4) présent à l'entrée (11.1) du troisième élément (11) de retard se trouve temporellement dans la plage (31) du passage par zéro (22) du signal (S14) de commande,
- et le retard (Tv11) du troisième élément (11) de retard est égal à la moitié de la période (T5) de la suroscillation (5) suivant le flanc (4) du signal (Sa1) transmis.

2. Dispositif égalisateur selon la revendication 1, caractérisé en ce que les éléments de retard sont des lignes de retard, des bascules de retard, un circuit passe-haut ou passe-bas.

3. Dispositif égalisateur selon la revendication 1, caractérisé en ce
- que chaque détecteur (17, 18) de saut de signal comprend un élément (15, 33) de retard disposé dans un trajet du signal (Sa1) transmis et un soustracteur (34) qui est relié par une entrée (34.1) de signal à l'entrée (15.1, 33.1) de l'élément (15, 33) de retard et par l'autre entrée (34.2) de signal à la sortie (15.2, 33.2) de l'élément (15, 33) de retard,
- et que le retard (Tv15, Tv33) des éléments (15, 33) de retard est de l'ordre de grandeur de la durée (T4) du flanc (4) de signal produit par le dispositif (2) de transmission lors d'un saut (3) de signal.

4. Dispositif égalisateur selon la revendication 1, caractérisé en ce que le dispositif (12) de mélange est un potentiomètre (35) électronique commandable.

5. Circuit égalisateur selon la revendication 1, caractérisé en ce que le dispositif (12) de mélange est un commutateur de signal à trois étages dont les extrémités sont reliées à une combinaison (16) de résistances.

6. Dispositif égalisateur selon la revendication 1, caractérisé en ce qu'en aval de la sortie de signal du soustracteur (19) il est monté un commutateur (44) à seuil symétrique que passent uniquement des niveaux de signal qui se trouvent à l'extérieur de la zone comprise entre les valeurs de niveau p1 et p2.

7. Dispositif égalisateur selon la revendication 3, caractérisé en ce qu'il comprend une chaîne (38) de quatre éléments (38.1 à 38.4) de retard identiques montés en série dont le retard (Tv38) représente chaque fois un tiers de la période (T5) de la suroscillation (5) du signal (Sa1) transmis, le premier détecteur (17) étant raccordé aux deux premiers éléments (38.1 et 38.2) de retard, le deuxième détecteur (18) aux deux derniers éléments (38.3 et 38.4) de retard et le dispositif (12) de mélange au circuit en série des deux éléments (38.2, 38.3) de retard centraux.
